# EUROPEAN PATENT SPECIFICATION

(11) **EP 0 997 673 B1**
(45) Date of publication and mention of the grant of the patent: **03.09.2003**
(21) Application number: 99119267.5
(22) Date of filing: 28.09.1999
(51) Int. Cl.: F16J 15/32

(54) **Sealing device for bearing, and bearing for supporting rolling roll, using the sealing device**
Dichtung für Lageranordnung, und Walzenlager mit einer derartigen Dichtung
Dispositif d'étanchéité pour palier et palier support de cylindre de laminage comportant un tel dispositif d'étanchéité

(30) Priority: 28.10.1998 JP 30680798
(43) Date of publication of application: 03.05.2000
(73) Proprietor: KOYO SEIKO CO., LTD., Chuo-ku Osaka (JP)
(72) Inventor: Suzuki, Nobuya, Chuo-ku, Osaka, 542-0081 (JP); Sunagawa, Masahide, Koyo Sealing Techno Co., Ltd., Itano-gun, Tokushima 771-1295 (JP); Fujimoto, Kazuya, Chuo-ku, Osaka, 542-0081 (JP)
(74) Representative: TER MEER STEINMEISTER & PARTNER GbR

(56) References cited:
- DE-A- 3 822 816
- FR-A- 2 587 772
- FR-A- 2 593 570
- US-A- 2 328 676
- US-A- 3 880 483

## Description

### BACKGROUND OF THE INVENTION

### Field of the Invention

The present invention relates to sealing arrangement comprising a sealing device provided between a first and a second member provided concentrically to partition off a facing space between the both members axially, said sealing device comprising an annular body fitted onto the first member in transition fit or clearance fit, a seal ring mounted integrally on the second member in detachable manner and having a lip adapted to contact with the annular body, and joining means for mounting the annular body to the first member in a condition, in which the annular body is prevented from relative displacement, the joining means comprising a frictional resistance applying member formed by an O-ring fitted in a peripheral groove to be provided on either of the annular body and the first member to be pressed against the other of the annular body and the first member.

Conventionally, sealing devices for bearings are mounted on both axial ends of a bearing for supporting a rolling roll in a rolling mill, for the purpose of sealing, for example, a lubricant in the bearing and preventing water or the like, which serves for cooling the rolling roll, from entering from outside

A sealing device of the above kind is known from the FR A 2 593 570. A similar sealing device may be taken from the US A 2 328 676.

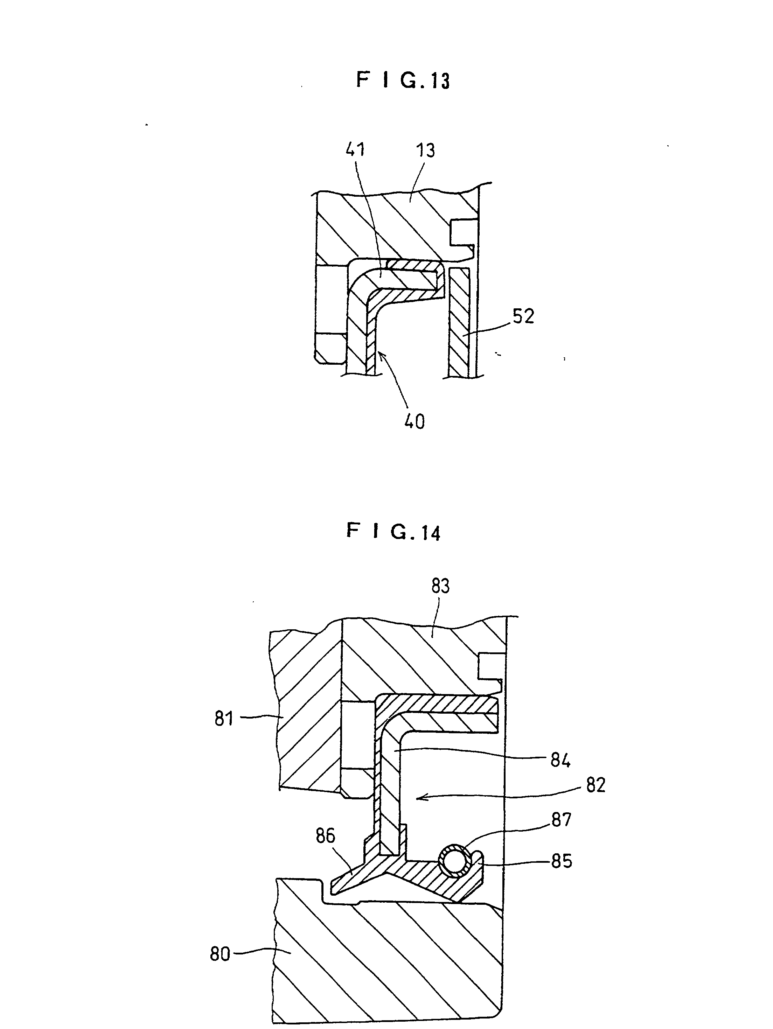

Another example of a sealing device of the present kind will be described with reference to fig. 14. Fig. 14 shows a state, in
which the sealing device is mounted between inner and outer races of a rolling bearing. In the drawing, the reference numeral 80 designates an inner race of the bearing, 81 an outer race of the bearing, 82 a seal ring serving as the sealing device, and 83 a seal retaining ring.

The seal ring 82 comprises in cross section of an upper half thereof an annular core metal 84, a main lip 85 and an auxiliary lip 86, which mount on and cover an inner periphery of the core metal 84. An elastic ring 87 referred to as a garter spring is mounted to an outer periphery of the main lip 85 to exert a clamping force on the same to press the same against an outer peripheral surface of the inner race 80 of the bearing. The auxiliary lip 86 faces the inner race 80 of the bearing with a small gap therebetween.

Hereupon, the seal ring 82 in the first example of the prior art has the main lip 85 pressure contacting with the inner race 80 of the bearing, so that an outer peripheral surface of the inner race 80 of the bearing gradually abrades during use to be degraded in sealing quality.

Specifically, because the main lip 85 is arranged outside of the bearing, water from outside is sprinkled directly on the main lip 85 and easy to enter into the bearing due to the degraded sealing quality caused by abrasion of the inner race 80 of the bearing as above described, so that the lubricant in the bearing becomes liable to deteriorate.

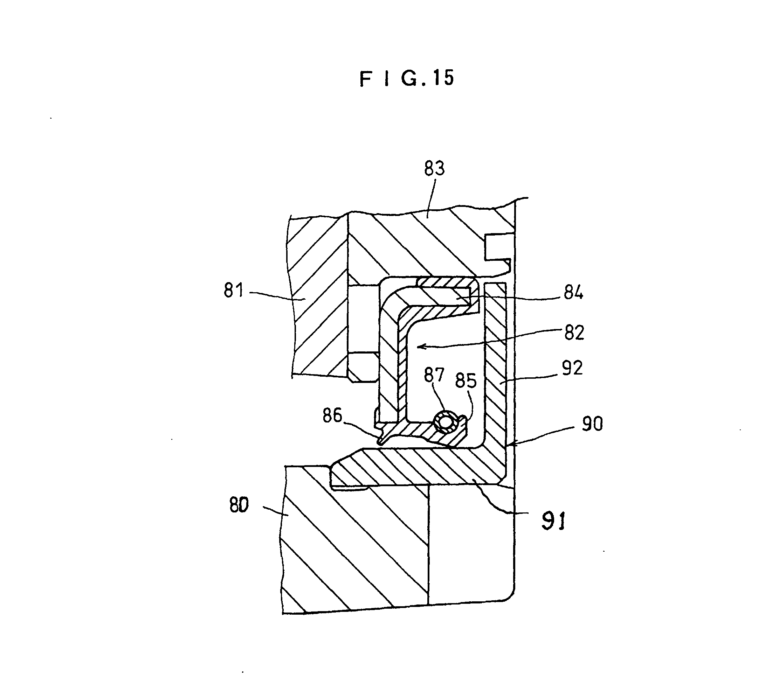

In contrast, a second example of the prior art shown in Fig. 15 comprises a sealing device comprising in combination the seal ring 82 shown in Fig. 14 and an annular body 90 referred to as a slinger.

An upper half of the annular body 90 is substantially oppositely directed L-shaped in cross section. A cylindrical-shaped section 91 of the annular body 90 is press fitted onto an outer peripheral surface of the inner race 80 of the bearing. An annular plate section 92 conceals the main lip 85 and the auxiliary lip 86 of the seal ring 82 from outside. The main lip 85 of the seal ring 82 is pressure contacted with the cylindrical-shaped section 91 of the annular body 90.

With such arrangement, the cylindrical-shaped section 91 of the annular body 90 abrades at a portion thereof, with which the main lip 85 contacts, during use, and so it suffices to replace the annular body 90 by a new one. Besides, even when such abrasion occurs, the annular plate section 92 of the annular body 90 prevents the main lip 85 from being sprinkled by water from outside, so that the sealing quality is maintained relatively favorable.

With the second example of the prior art, however, operations of mounting and dismounting the annular body 90 on and from the inner race 80 of the bearing are considerably troublesome because the annular body 90 is mounted on the inner race 80 in pressure fitting. Further, such operations of mounting and dismounting are no consideration at the time of replacement of the annular body 90 but the annular body 90 cannot be reused due to deformation of the annular plate section 92 possibly caused by forced detachment when the annular body 90 is to be dismounted simply for the purpose of maintenance.

### SUMMARY OF THE INVENTION

Accordingly, it is a primary object of the invention to provide a sealing device, in which an annular body combined with a seal ring can be simply mounted and dismounted without deformation.

It is another object of the invention to provide a bearing for supporting a rolling roll, which can be reduced in running cost and of which components need not be replaced because it suffices only to replace a sealing device by a new one when the sealing device comes to the end of life.

To comply with these objects, the sealing device according to the invention is characterized by the features of claim 1.

Other objects, features and advantages of the invention will become clear from the following description.

The invention provides sealing arrangement comprising a sealing device provided between two members provided concentrically to partition off a facing space between the both members axially, and comprising an annular body fitted onto the first member in transition fit or clearance fit, a seal ring mounted integrally on the second member in detachable manner and having a lip adapted to contact with the annular body, and joining means for mounting the annular body to the first member in a condition in which the annular body is prevented from relative displacement.

In the sealing arrangement of the invention, the annular body, with which the lip of the seal ring is made to contact, can be fitted onto the first member, for example, an inner race of a bearing, with small resistance. In this state, the first member and the annular body are made relatively displaceable as they are, and so they are prevented by the joining means from being displaced relative to each other. In addition, relative displacements referred to here mean movements in axial or rotating direction.

In this manner, the annular body is fitted onto the first member in transition fit or clearance fit, so that operations of mounting and dismounting the annular body can be simply performed as compared with those of the prior art with press fit and forced detachment is dispensed with in dismounting of the annular body, which can avoid deformation of the annular body and so make the same reusable.

In addition, the joining means preferably may comprise a frictional resistance applying member provided in fitting portions of the annular body and of the first member to apply frictional resistance to both the annular body and the first member, thereby restricting relative displacements between the first member and the annular body.

In addition, the joining means preferably may comprise a detachment preventive member provided in fitting portions of the annular body and of the first member in axially latching manner to prevent axial displacements of both the annular body and the first member, thereby permitting axial latching to prevent axial movements between the first member and the annular body.

In addition, the joining means preferably may comprise a recess and a projection, respectively, provided on the annular body and on the first member in axially engaging manner to prevent relative rotation of both the annular body and the first member, thereby permitting latching in a direction of rotation to prevent relative rotation between the first member and the annular body.

The invention provides a bearing for supporting a rolling roll rotatably relative to a roll chock, the bearing including inner races, flanges provided on axial end sides of outer races to be integral with or separate from the outer races, and sealing devices provided in spaces radially facing each other to be disposed between the inner races and the flanges, the sealing devices including annular bodies, seal rings and joining means, the annular bodies being fitted externally onto the inner races in transition fit or clearance fit, the inner races and the annular bodies being prevented by the joining means from relative displacements, and the seal rings being mounted detachably on the flanges with lips thereof contacted with the annular bodies.

In the present bearing, the lip of the seal ring in the sealing device is made to contact with the annular body in the sealing device, whereby the lip of the seal ring is not brought into direct contact with the inner race to eliminate abrasion of the inner race, that is, running cost can be reduced and the need of replacing components of the bearing by new ones is eliminated because it suffices only to replace the sealing device by a new one when the sealing device comes to the end of life.

### BRIEF DESCRIPTION OF THE DRAWINGS

These and other objects as well as advantages of the invention will become clear by the following description of preferred embodiments of the invention with reference to the accompanying drawings, wherein
Fig. 1 is a longitudinal, cross sectional side view showing a support for a rolling roll, to which a sealing arrangement of the invention is applied;
Fig. 2 is a longitudinal, cross sectional side view showing in details an upper half of a bearing for supporting a rolling roll, shown in Fig. 1;
Fig. 3 is a longitudinal, cross sectional side view showing an upper half of a sealing arrangement according to a first preferred embodiment of the invention;
Fig. 4 is a planar development view showing a portion of an extension of an inner race shown in Fig. 3;
Fig. 5 is a longitudinal, cross sectional side view showing an upper half of a sealing arrangement according to a second preferred embodiment of the invention;
Fig. 6 is a longitudinal, cross sectional side view showing an upper half of a sealing arrangement according to a third preferred embodiment of the invention;
Fig. 7 is a longitudinal, cross sectional side view showing an upper half of a sealing arrangement according to a fourth preferred embodiment of the invention;
Fig. 8 is a longitudinal, cross sectional side view showing an upper half of a sealing arrangement according to a fifth preferred embodiment of the invention;
Fig. 9 is a longitudinal, cross sectional side view showing an upper half of a sealing arrangement according to a sixth preferred embodiment of the invention;
Fig. 10 is a top plan view showing an essential part of Fig. 9;
Fig. 11 is a longitudinal, cross sectional side view showing an upper half of a sealing arrangement according to a seventh preferred embodiment of the invention;
Fig. 12 is a top plan view showing an essential part of Fig. 11;
Fig. 13 is a longitudinal, cross sectional side view showing an upper half of a sealing arrangement according to an eighth preferred embodiment of the invention;
Fig. 14 is a longitudinal, cross sectional side view showing an upper half of a sealing device which constitutes a first prior art; and
Fig. 15 is a longitudinal, cross sectional side view showing an upper half of a sealing device which constitutes a second prior art;

In all these figures, like components are indicated by the same numerals.

### DETAILED DESCRIPTION OF THE EMBODIMENTS

Preferred embodiments of the invention will be described with reference to the accompanying drawings.

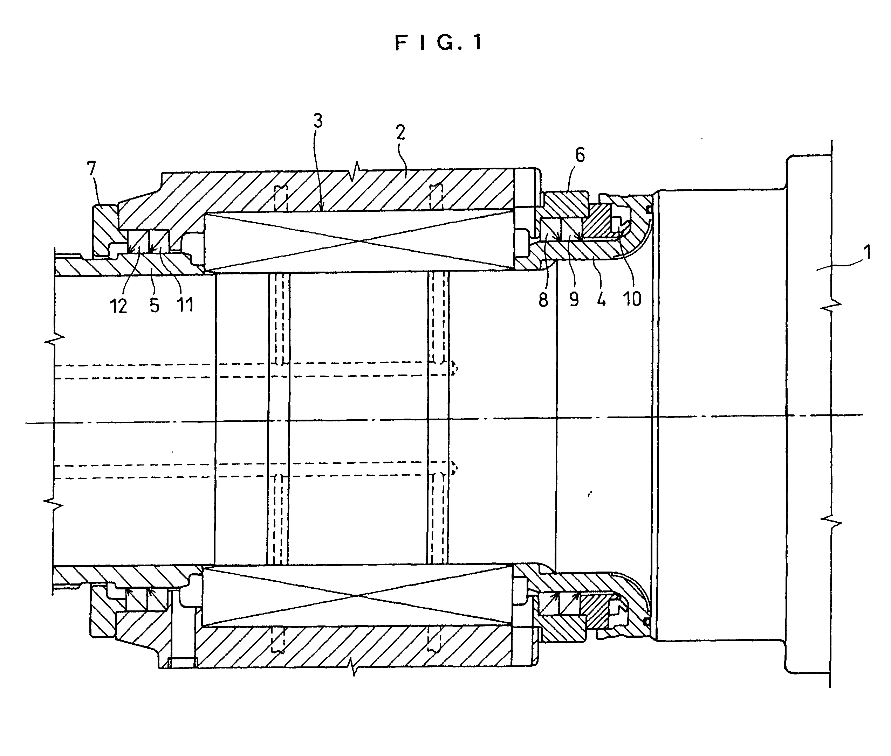

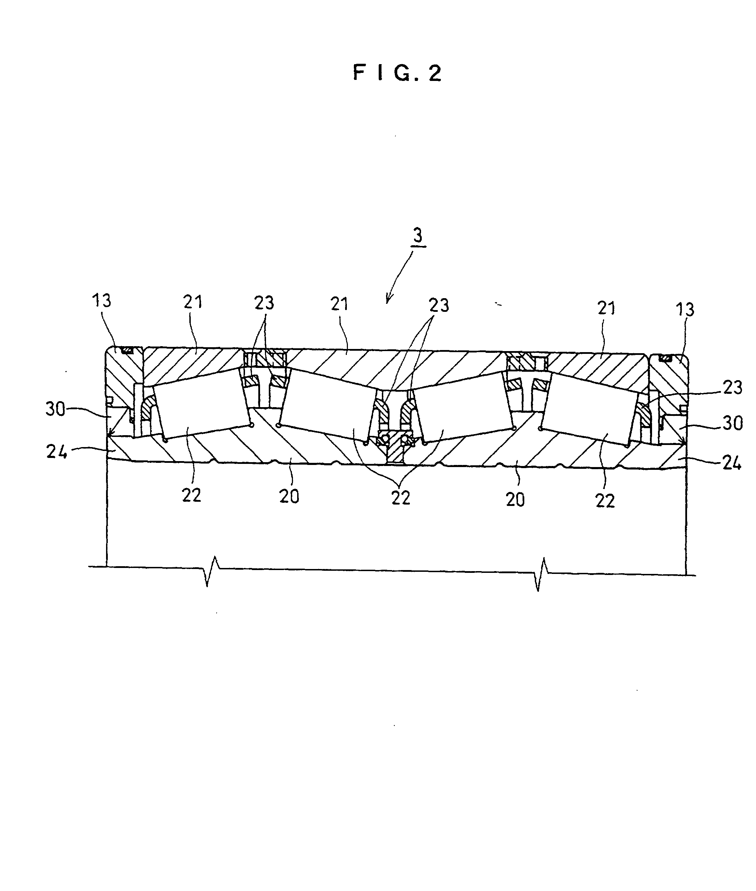

Here, a sealing arrangement according to a first preferred embodiment of the invention will be described by referring to the case where the sealing devices are mounted on both axial ends of a bearing for supporting a rolling roll shown in Figs. 1 and 2.

First, prior to explaining the sealing arrangement according to the first embodiment, a support for a rolling roll will be briefly described, to which support section the sealing device is applied.

Referring to Fig. 1, the reference numeral 1 designates a rolling roll, 2 a roll chock, 3 a radial type rolling bearing serving as a bearing for supporting the rolling roll, 4, inner race presser members for the rolling bearing 3, 6, 7 outer race presser members for the rolling bearing 3, 8-12 seals arranged in facing gaps between the pair of inner race presser members 4, 5 and the pair of outer race presser members 6, 7.

Referring to Fig. 2, the rolling bearing 3 comprises four rows of tapered roller bearings, and thus comprises two inner races 20, three outer races 21, a plurality of tapered rollers 22, and four retainers 23. Among these parts, the two inner races 20 are formed at one ends thereof with extensions 24, 24, whereby an axial width of all the inner races 20 is set to be greater than an axial width of all the outer races 21.

In such rolling mill, water is sprinkled on the rolling roll 1 to cool the same, and so the plurality of seals 8-12 are provided outside the rolling bearing 3 so as to prevent the water from being sprinkled directly on the rolling bearing 3. However, the water sometimes passes through the plurality of seals 8-12, so that sealing devices 30 are mounted on the both axial ends of the rolling bearing 3 in order to prevent invasion of water into an interior of the rolling bearing 3.

In addition, it is common in the above described rolling mill that the sealing devices 30 are arranged on outer peripheries of the extensions 24 of the inner races 20 to be adjacent to sides of the outer races 21 with seal retaining rings 13 therebetween.

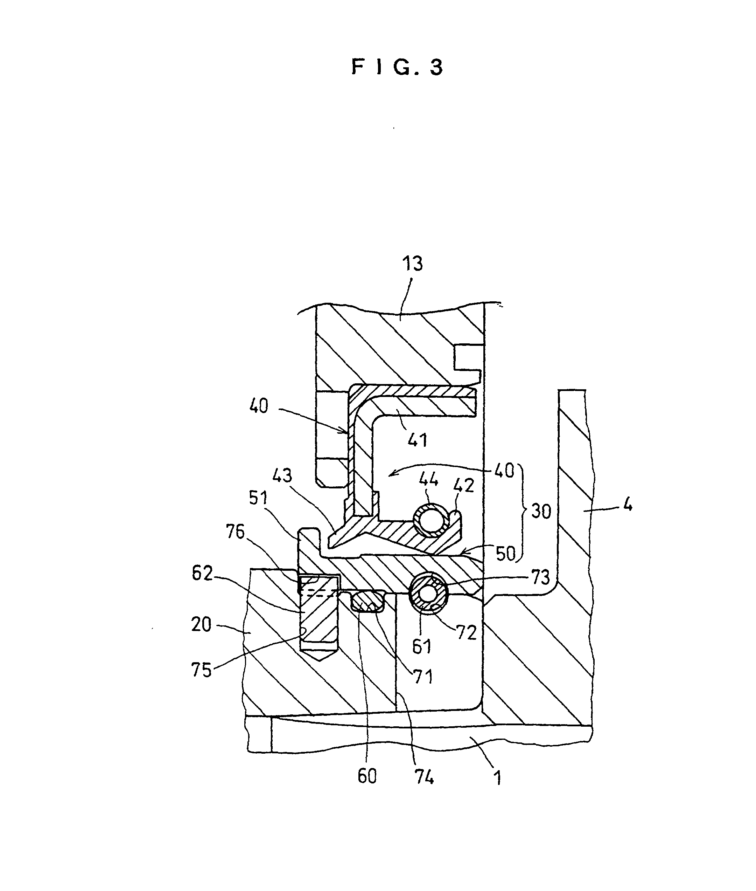

Referring to Fig. 3, the sealing device 30 according to the first embodiment comprises in combination a seal ring 40 and an annular body 50 referred to as a slinger.

The seal ring 40 comprises an annular core metal 41, of which upper half is substantially inverted L-shaped in cross section, and a main lip 42 and an auxiliary lip 43, which mount on and cover an inner periphery of the core metal 41. An elastic ring 44 referred to as a garter spring is mounted to an outer periphery of the main lip 42 to exert a clamping force of the elastic ring 44 on the same to press the same against an outer peripheral surface of the annular body 50. The auxiliary lip 43 faces the annular body 50 with a small gap therebetween.

The annular body 50 is formed to be substantially cylindrical-shaped, and an upright portion 51 is formed on one axial end of the annular body 50 to rise outward in a diametrical direction. The upright portion 51 serves to form a labyrinth seal between it and the auxiliary lip 43 on the seal ring 40. The annular body 50 is manufactured by making a metallic material, for example, carbon steel (JIS Standard S45C), sheet metal, machining the same, and then quench hardening and chrome plating the same.

The seal ring 40 is fitted into an inner peripheral surface of a roll chock 11 with the seal retaining ring 13 therebetween, and is disposed adjacent to and laterally of a side of the outer race 21 of the rolling bearing 3. In addition, the seal ring 40 is press fitted integrally into the inner peripheral surface of the seal retaining ring 13 in detachable manner.

The annular body 50 is clearance or transition fitted onto the extension 24 on the inner race 20 of the rolling bearing 3 to thereby become detachable with small resistance. Therefore, because the annular body 50 becomes easy of axial detachment from the inner race 20 and easy of rotation in a circumferential direction, it is dealt with so as to be joined to the inner race 20 in a condition, in which it is prevented from axial detachment and rotation in the circumferential direction.

Concretely, an arrangement, by which the inner race 20 and the annular body 50 are fitted to each other, includes an O-ring 60 serving as a frictional resistance applying member, a flexible bar 61 serving as a detachment preventive member, and a pin 62. The flexible bar 61 is composed of a coil spring of metal having a small winding diameter. The pin 62 is formed of a metallic material, for example, carbon steel (JIS Standard S45C), and is subjected to, for example, quench hardening.

First, the O-ring 60 is fitted onto a first peripheral groove 71, which is provided substantially axially centrally on the outer peripheral surface of the extension 24 on the inner race 20, such that its outer peripheral portion is caused to press against the inner peripheral surface of the annular body 50. Accordingly, the O-ring 60 applies frictional resistance to the annular body 50 and provides for sealing between the annular body 50 and the inner race 20.

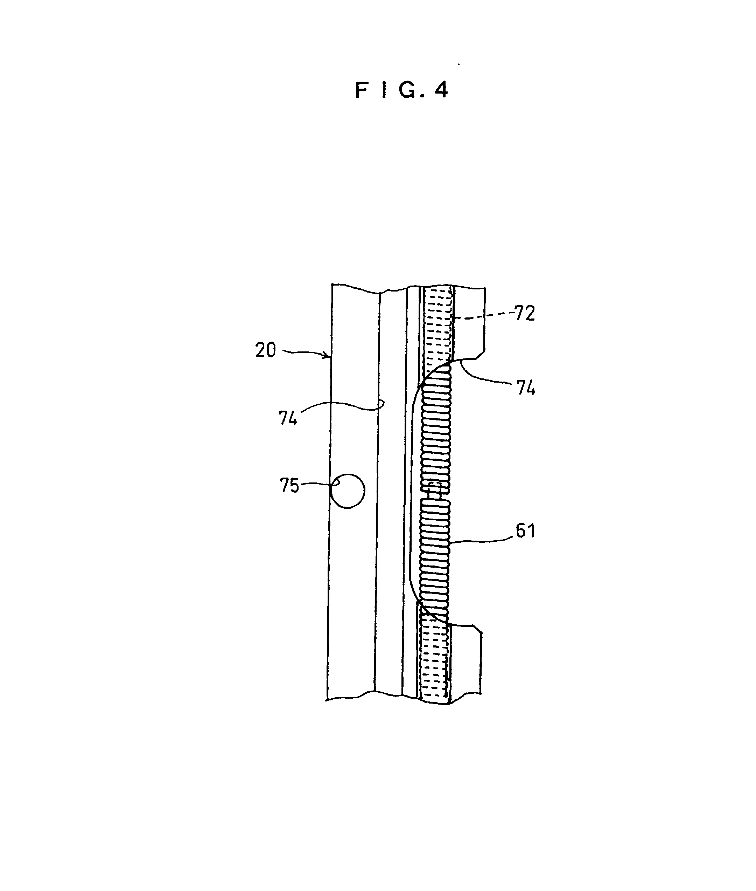

The flexible bar 61 is inserted into an annular space, which is defined by a second peripheral groove 72 provided near an axial end of and on the outer peripheral surface of the extension 24 on the inner race 20 and a peripheral groove 73 provided on the inner peripheral surface of the annular body 50 to be positioned corresponding to the second peripheral groove 72, from a notch 74 provided contiguous to the second peripheral groove 72 on an outer end of the extension 24 on the inner race 20 as shown in Fig. 4, and so is caught by the inner race 20 and the annular body 50 in the axial direction. Therefore, the annular body 50 is prevented from detaching from the inner race 20 in the axial direction.

The pin 62 is fitted into a hole 75, which is provided near a base end of the extension 24 on the inner race 20 to extend diametrically at, for example, one location in the circumferential direction, with an upper end of the pin 62 projecting above the hole 75, and the projecting upper end thereof is engaged by a recess 76, which is provided at, for example, one location on the inner peripheral surface of the inner end of the annular body 50 in the circumferential direction to be opened axially toward an edge of the annular body 50. Such engagement of the pin 62 and the recess 76 prevents the annular body 50 from rotating relative to the inner race 20.

The annular body 50 is joined to the inner race 20 in a manner, in which it is prevented from detaching axially from and circumferentially rotating relative to the inner race 20.

Here, the work procedure of the annular body 50 at the time of mounting and dismounting will be explained.

First, when the annular body is to be mounted, the O-ring 60 and the pin 62 are mounted on the inner race 20, and the annular body 50 is fitted onto the inner race 20. Because such fitting is performed in clearance fit or transition fit, the annular body 50 can be mounted with relatively small resistance. At the final stage of fitting of the annular body 50, the recess 76 on an inner end of the annular body 50 is made to engage with the pin 62 in the axial direction. Thus the annular body 50 becomes impossible to rotate relative to the inner race 20. Subsequently, an end of the flexible bar 61 is inserted into the annular space, which is defined between the second peripheral groove 72 on the inner race 20 and the peripheral groove 73 on the annular body 50, from the notch 74 in the inner race 20, and the flexible bar 61 is gradually pushed toward one side in the circumferential direction. In the first embodiment, a projection on the end of the flexible bar 61 is finally inserted into and connected to a hollow portion on the other end of the flexible bar 61. Accordingly, the annular body 50 is made to be prevented from detaching axially from the inner race 20.

Hereupon, in order to make such mounting quality favorable, a widthwise dimension of the recess 76 in the circumferential direction is set to be greater than an outer diameter of the pin 62, and an inner diameter of the annular space defined by the two peripheral grooves 72, 73 is set to be greater than an outer diameter of the flexible bar 61. In this case, the annular body 50 has play in the axial and circumferential directions, which will make the annular body 50 liable to rattle. However, the O-ring 60 applies frictional resistance to the annular body 50 to thereby absorb such play to prevent the annular body 50 from rattling.

On the other hand, when the annular body 50 is to be dismounted, the both ends of the flexible bar 61 is separated from each other by putting a hand or a tool such as a spanner through the notch 74 in the annular body 50, and the flexible bar 61 is then pulled out. Subsequently, the annular body 50 suffices to be pulled out. In this state, the annular body 50 is fitted onto the inner race 20 with only frictional resistance of the O-ring 60, so that such pulling-out can be simply performed with less resistance as compared with that in the case of press fit in the prior art. Therefore, deformation of the annular body 50 is eliminated.

With the above described sealing device 30, abrasion unavoidably goes on the outer peripheral surface of the annular body 50 due to rubbing of the seal ring 40 on the main lip 42 as use proceeds. However, mounting and dismounting operations can be simply performed at the time of exchanging the annular body 50 by a new one. Apart from abrasion of the annular body 50, because the annular body 50 can be simply dismounted from the inner race 20 without deformation when the sealing device 30 is to be removed for the purpose of inspecting an interior of the bearing for maintenance, the annular body 50 can be reused.

In addition, the invention is not limited to the above described embodiment, but is susceptible of various applications and modifications.

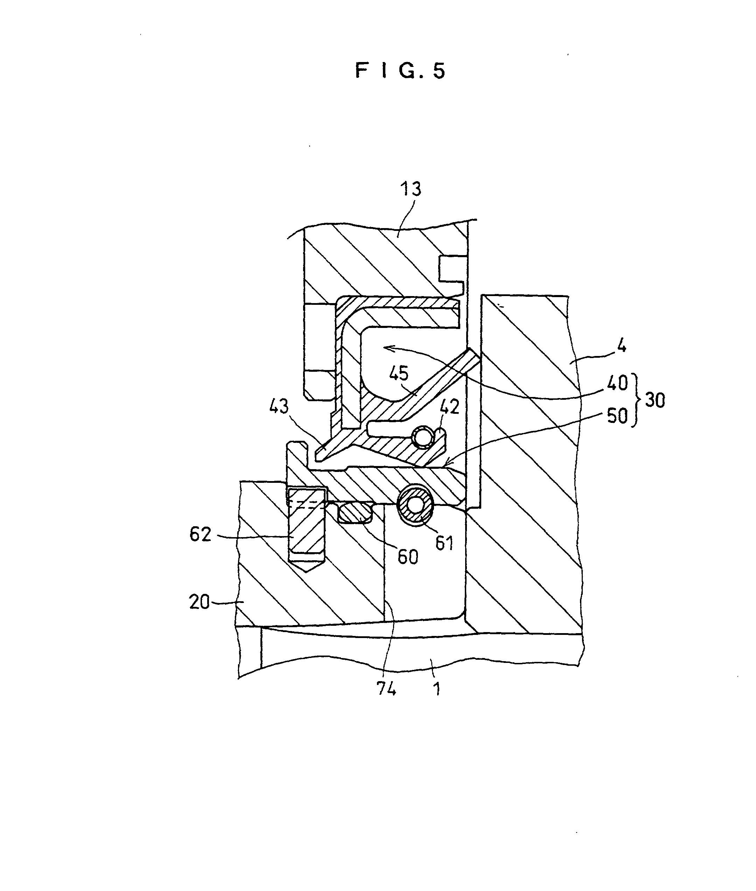

Fig. 5 shows a second preferred embodiment of the invention, and corresponds to Fig. 3. In the second embodiment described above, a seal ring 40 is provided with a side lip 45, and an inner race presser members 13, 14 are set to have a large outer diameter on an inner end side. The side lip 45 is adapted to contact with an end face of the inner end of the inner race presser member 13, 14. In this case, if the seals 8-12 outside the rolling bearing 3 should permit passage of water therethrough, it would be possible to make the water hard to reach the main lip 42 on the seal ring 40.

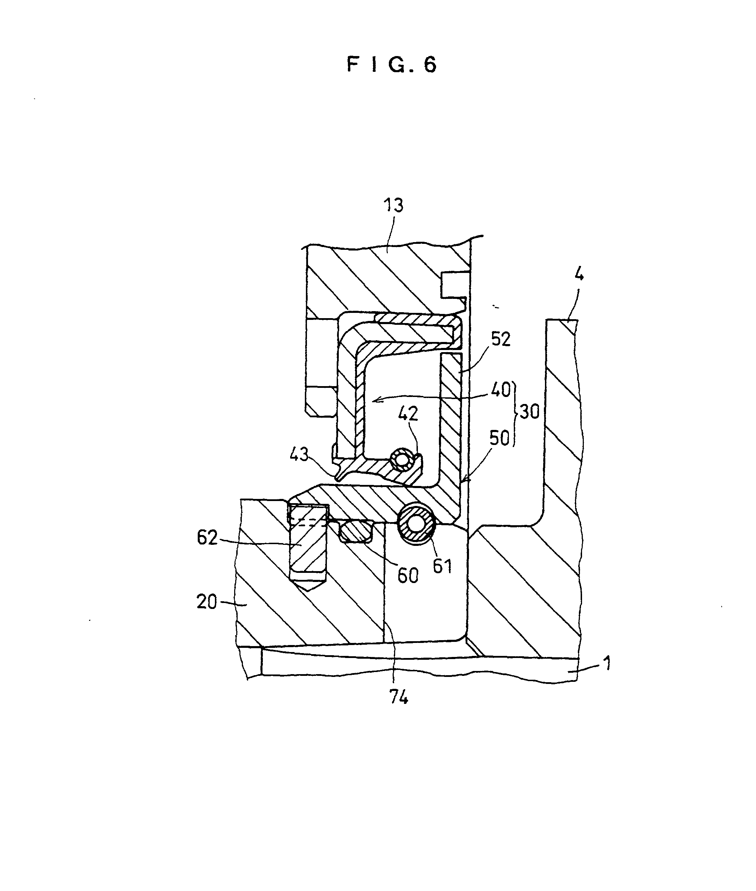

Fig. 6 shows a third preferred embodiment of the invention, and corresponds to Fig. 3. In the third embodiment, an upper half of an annular body 50 is substantially oppositely directed L-shaped in cross section. An outer peripheral edge of a radially outward, upright annular plate section 52 on the annular body 50 is made to face an outer end of the annular core metal 41 of the seal ring 40 with a small gap therebetween. In this case, like the above described second embodiment, if the seals 8-12 outside the rolling bearing 3 should permit passage of water therethrough, it would be possible to make the water hard to reach the main lip 42 on the seal ring 40.

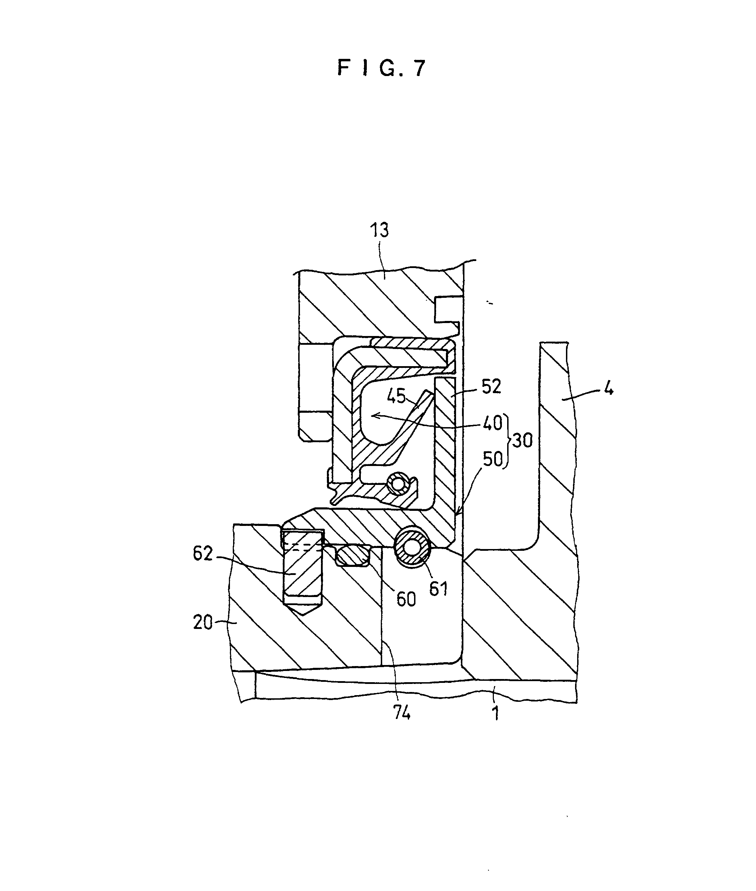

Fig. 7 shows a fourth preferred embodiment of the invention, and corresponds to Fig. 3. The fourth embodiment comprises in combination the seal ring 40 in the second embodiment and the annular body 50 in the third embodiment. In the fourth embodiment, however, the side lip 45 on the seal ring 40 is adapted to contact with an inner surface of the annular plate section 52 on the annular body 50. In this case, the sealing quality is further improved over the second and third embodiments.

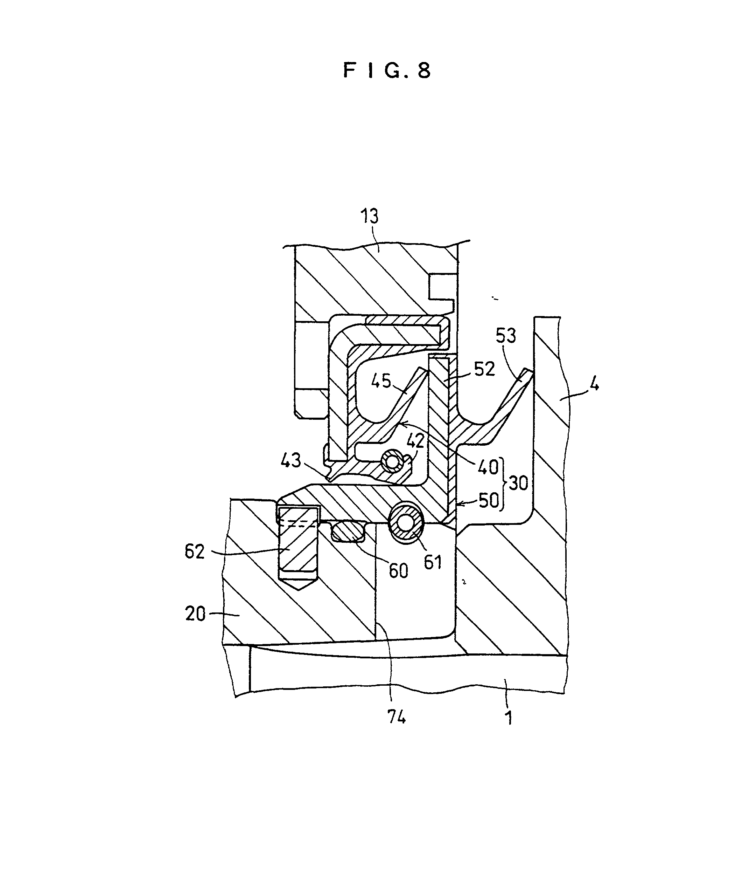

Fig. 8 shows a fifth preferred embodiment of the invention, and corresponds to Fig. 3. The fifth embodiment is premised on a constitution of the above described fourth embodiment, and comprises a side lip 53 provided on an outer surface of the annular plate section 52 on the annular body 50. In the fifth embodiment, inner race presser members 4, 5 are set to have a large outer diameter on inner end sides thereof as in the second embodiment so that the above described side lips 53 are made to contact with end surfaces of inner ends of the inner race presser members 4, 5. In this case, the sealing quality is further improved over the second to fourth embodiments.

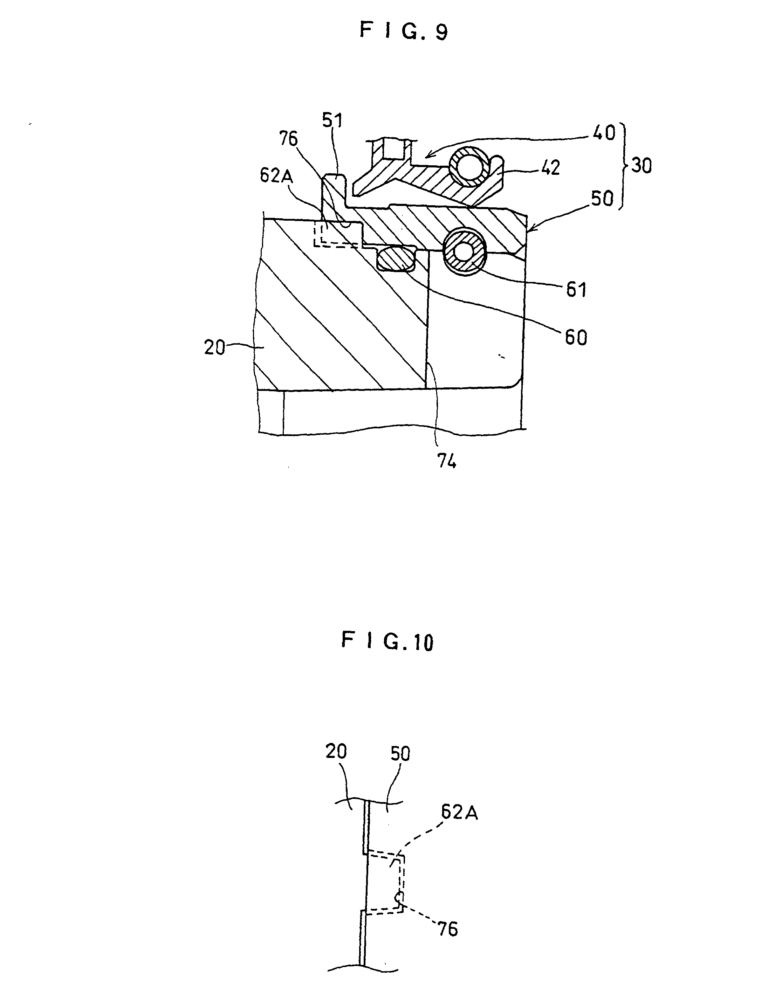

Figs. 9 and 10 show a sixth preferred embodiment of the invention, Fig. 9 corresponding partly to Fig. 3, and Fig. 10 being a top plan view of an essential part shown in Fig. 9. In the sixth embodiment, the pin 62 in the respective embodiments described above is omitted, and instead a convex-shaped protrusion 62A is provided on a stepped portion on a base end side of the extension 24 on the inner race 20. That is, the convex-shaped protrusion 62A is adapted to engage with the recess 76 on the annular body 50. With this arrangement, it is possible to reduce the number of parts and manday for assembling as compared with the respective embodiments described above, which employ the pin 62, thus enabling contributing to reduction in manufacturing cost.

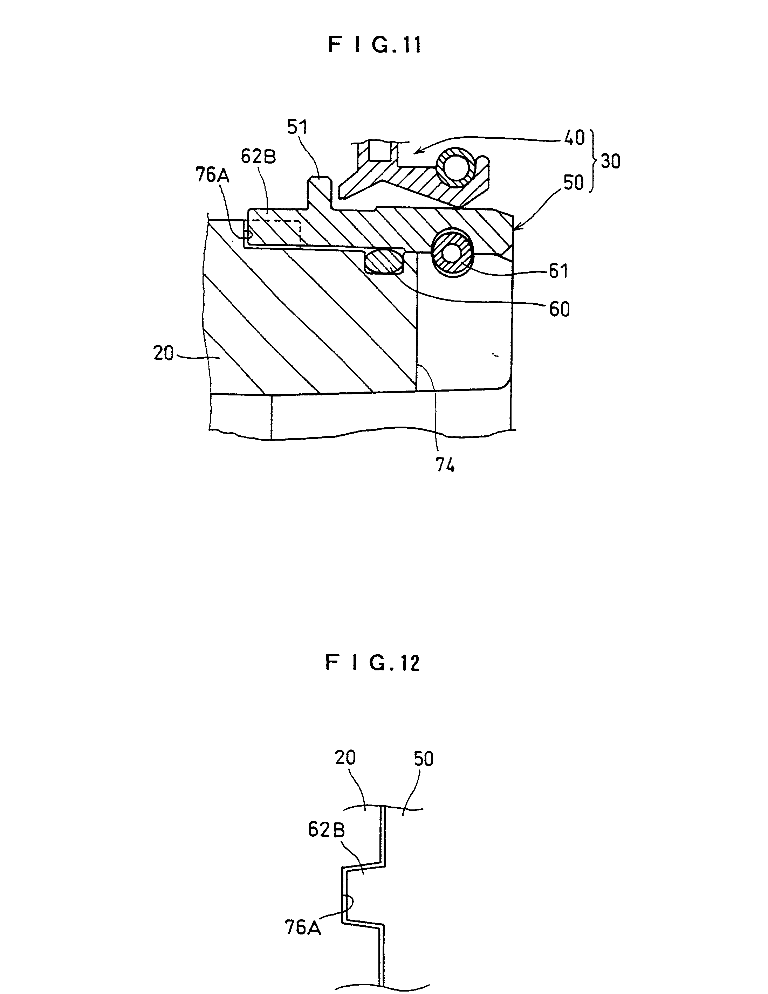

Figs. 11 and 12 show a seventh preferred embodiment of the invention, Fig. 11 corresponding partly to Fig. 3, and Fig. 12 being a top plan view of an essential part shown in Fig. 11. In the seventh embodiment, the pin 62 and the recess 76 on the annular body 50 in the respective embodiments described above are omitted, and instead a projection 62B is provided at one location in a circumference of the inner end of the annular body 50 and a recess 76A is provided in the body portion of the inner race 20 to be opened to the extension 24. That is, the projection 62B on the annular body 50 is adapted to engage with the recess 76A on the inner race 20. With this arrangement, it is also possible to reduce the number of parts and manday for assembling as compared with the respective embodiments described above, which employ the pin 62, thus enabling contributing to reduction in manufacturing cost.

Fig. 13 shows a eighth preferred embodiment of the invention, and corresponds partly to Fig. 3. The eighth embodiment is a modification of the third to fifth embodiments. In this embodiment, the annular core metal 41 of the seal ring 40 is made small in widthwise dimension in the axial direction and the annular plate section 52 on the annular body 50 is made large in outer diameter. Thus the annular plate section 52 has its outer peripheral edge facing the inner peripheral surface of the inner race presser member 13 with a small gap therebetween, and has its inner surface on the outer peripheral side thereof facing the outer end of the annular core metal 41 of the seal ring 40 with a small gap therebetween.

Although not shown, the seal ring 40 in the respective embodiments described above can be changed in configuration and number.

While the seal retaining ring 13 in the respective embodiments described above is provided on its inner end side with the radially inwardly directed flange, such flange may be omitted. In this case, the seal retaining ring 13 can be reduced in axial dimension.

The respective embodiments described above employ in combination the O-ring 60, the flexible bar 61, the pin 62 and the recess 76 in order to mount the annular body 50 on the inner race 20 of the rolling bearing 3 in such a manner to prevent relative displacement therebetween. Depending upon the configuration, in which the sealing device 30 is installed, at least only one or at least two among these constituent components may be employed. Several examples for this are given concretely as follows. ① In the case where the inner race presser members 4, 5 are used to bear the annular bodies 50 axially, they prevent the annular bodies 50 from detaching axially, so that it suffices to use either of a combination of the pin 62 and the recess 76 and the O-ring 60 to provide for prevention of rotation. ② In the case where the inner race presser members 4, 5 are used to press the annular bodies 50 axially, they prevent the annular bodies 50 from detaching axially and rotating, so that it suffices to use only the O-ring 60. That is, in the case of using only the O-ring 60, adjustment of interference for the annular bodies 50 provides frictional resistance to prevent the annular body 50, to some extent, from displacing axially and circumferentially, so that use of such arrangement becomes adequately possible depending upon the configuration, in which the sealing device 30 is installed. In this case, flexibility of the O-ring 60 makes it simple to dismount the annular body 50, as compared with the case with press fitting of metals as in the prior art. Further, in the case where the inner race presser members 4, are not used to bear the annular bodies 50 axially, axial detachment of the annular bodies 50 can be prevented by providing peripheral grooves facingly on both the inner peripheral surface of the annular bodies 50 and the outer peripheral surface of the inner race 20 and fitting the O-ring 60 into the both peripheral grooves.

While there has been described what is at present considered to be preferred embodiments of this invention, it will be understood that various modifications may be made therein, and it is intended to cover in the appended claims all such modifications as fall within the true spirit and scope of this invention.

## Claims

1. Sealing arrangement comprising a sealing device provided between a first and a second member (20,13) provided concentrically to partition off a facing space between the both members (20, 13) axially, said sealing device (30) comprising an annular body (50) fitted onto the first member (20) in transition fit or clearance fit, a seal ring (40) mounted integrally on the second member (13) in detachable manner and having a lip (42) adapted to contact with the annular body (50), and joining means (60, 61, 62) for mounting the annular body to the first member (20) in a condition, in which the annular body is prevented from relative displacement, the joining means comprising a frictional resistance applying member (60) formed by an O-ring fitted in a peripheral groove (71) to be provided on either of the annular body (50) and the first member (20) to be pressed against the other of the annular body (50) and the first member (20), **characterized in that** the joining means further comprise a detachment preventing member formed by a flexible bar (61) adapted to be inserted into peripheral grooves which are provided on the annular body (50) and the first member (20) with axial positions thereof corresponding to each other to prevent axial displacement of both the annular body (50) and the first member (20), and a recess and a projection (62, 75, 76) provided on the annular body (50) and on the first member (20) in axially engaging manner to prevent relative rotation of both the annular body (50) and the first member (20).

2. Sealing arrangement as claimed in claim 1, **characterized by** a notch (74) provided contiguous to the peripheral groove (72) on the first member (20) for inserting the flexible bar into the annular space which is define between the peripheral groove (72) on the first member and the peripheral groove on the annular body (50).

3. Sealing arrangement as claimed in 1 or 2, **characterized in that** the projection is formed by a pin (62).

4. Sealing arrangement as claimed in claim 1 or 2, **characterized in that** the widthwise dimension of the recess (76) in the circumferential direction is set to be greater than the outer diameter of the pin (62) and that the inner diameter of the annular space define by the two peripheral grooves (72, 73) is set to be greater than the outer diameter of the flexible bar (61).

5. Sealing arrangement claimed in one of claims 1 to 4, **characterized in that** the flexible bar (61) is formed by a coil spring of metal having a small winding diameter.

6. Sealing arrangement as claimed in one of the preceeding claims, **characterized in that** the annular body (50) comprises a cylindrical-shaped section and an annular plate section (51) provided on one axial end of the cylindrical-shaped section to be contiguous thereto and extend radially therefrom and having a peripheral edge thereof facing the seal ring (40) or the second member (13) with a small gap therebetween.

7. Sealing arrangement as claimed in claim 6, **characterized in that** the seal ring (40) comprises a radial lip (42) adapted to contact the cylindrical-shaped section of the annular body (50) and a side lip (45) adapted to contact with the annular plate section on the annular body.

8. A bearing for supporting a rolling roll rotatably relative to a roll chock, said bearing including inner races, flanges provided on axial end sides of outer races to be integral with or separate from outer races, **characterized by** a sealing arrangement according to one of claims 1 to 7.

## Patentansprüche

1. Dichtungsanordnung mit einer Dichtungseinrichtung zwischen einem ersten und einem zweiten Teil (20,13), die konzentrisch zueinander angeordnet sind, zur Abtrennung eines Zwischenraums zwischen den beiden Teilen (20,13) in Axialrichtung, welche Dichtungseinrichtung (30) einen ringförmigen Körper (50), der auf das erste Teil (20) mit Übergangspassung oder Spielpassung aufgesetzt ist, einen Dichtring (40), der mit dem zweiten Teil (13) lösbar verbunden ist, und eine Lippe (42) aufweist, die zur Berührung mit dem ringförmigen Körper (50) dient, sowie Verbindungsmittel (60,61,62) zur Befestigung des ringförmigen Körpers an dem ersten Teil (20) in einer Weise, bei der der ringförmige Körper gegen eine relative Verschiebung gesichert wird, welche Verbindungsmittel ein Teil (60), das einen Reibwiderstand ausübt und gebildet wird durch einen O-Ring, der in eine Umfangsnut (71) eingefügt ist, die entweder auf dem ringförmigen Körper (50) oder dem ersten Teil (20) vorgesehen ist, und diese gegen das jeweils andere Teil des ringförmigen Körpers (50) und des ersten Teils (20) drückt, **dadurch gekennzeichnet, dass** die Verbindungsmittel weiterhin ein Teil zum Verhindern einer Trennung aufweisen, das durch eine flexible Stange (61), die in Umfangsnuten einfügbar ist, die sich auf dem ringförmigen Körper (50) und dem ersten Teil (20) befinden, deren axiale Positionen einander entsprechen, damit eine Axialverschiebung des ringförmigen Körpers (50) und des ersten Teils (20) zueinander verhindert wird, sowie eine Ausnehmung und einen Vorsprung (62,75,76) gebildet wird, die an dem ringförmigen Körper (50) und dem ersten Teil (20) in einer axial eingreifenden Weise vorgesehen sind und eine relative Drehung des ringförmigen Körpers (50) und des ersten Teils (20) verhindern.

2. Dichtungsanordnung nach Anspruch 1, **gekennzeichnet durch** eine Ausnehmung (74), die anschließend an die Umfangsnut (72) des ersten Teils (20) vorgesehen ist, zum Einfügen der flexiblen Stange in den ringförmigen Zwischenraum, der gebildet wird zwischen der Umfangsnut (72) des ersten Teils und der Umfangsnut des ringförmigen Körpers (50).

3. Dichtungsanordnung nach Anspruch 1 oder 2, **dadurch gekennzeichnet, dass** der Vorsprung durch einen Stift (62) gebildet wird.

4. Dichtungsanordnung nach Anspruch 1 oder 2, **dadurch gekennzeichnet, dass** die Breitendimension der Ausnehmung (76) in Umfangsrichtung größer ist als der Außendurchmesser des Stiftes (62) und dass der Innendurchmesser des ringförmigen Raumes, der gebildet wird durch die Umfangsnuten (72,73), größer ist als der Außendurchmesser der flexiblen Stange (61).

5. Dichtungsanordnung nach einem der Ansprüche 1 bis 4, **dadurch gekennzeichnet, dass** die flexible Stange (61) gebildet wird durch eine Schraubenfeder aus Metall mit kleinem Windungsdurchmesser.

6. Dichtungsanordnung nach einem der vorgehenden Ansprüche, **dadurch gekennzeichnet, dass** der ringförmige Körper (50) einen zylindrischen Abschnitt und einen ringförmigen, plattenförmigen Abschnitt (51) aufweist, der sich an einem axialen Ende des zylindrisch geformten Abschnitts befindet und von diesem ausgeht und sich in Radialrichtung von dem zylindrischen Abschnitt erstreckt und eine Umfangskante aufweist, die dem Dichtungsring (40) oder dem zweiten Teil (13) mit einem kleinen Zwischenraum gegenüberliegt.

7. Dichtungsanordnung nach Anspruch 6, **dadurch gekennzeichnet, dass** der Dichtring (40) eine radiale Lippe (42) aufweist, die vorgesehen ist zum Berühren des zylindrischen Abschnitts des ringförmigen Körpers (50), und eine Seitenlippe (45), die vorgesehen ist zur Berührung mit dem ringförmigen, plattenförmigen Abschnitt des zweiten ringförmigen Körpers.

8. Lager zur Abstützung einer Walze, die drehbar in Bezug auf einen Walzenblock angeordnet ist, welches Lager innere Ringe, Flansche an axialen Endseiten von äußeren Ringen, die verbunden oder getrennt von den äußeren Ringen sind, **gekennzeichnet durch** eine Dichtungsanordnung gemäß einem der Ansprüche 1 bis 7.

## Revendications

1. Agencement d'étanchéité comprenant un dispositif d'étanchéité disposé entre un premier et un deuxième éléments (20, 13) disposés de façon concentrique pour cloisonner un espace de vis-à-vis entre les deux éléments (20, 13) axialement, ledit dispositif d'étanchéité(30) comprenant un corps annulaire (50) fixé sur le premier élément (20) en fixation à transition ou en fixation à jeu, une bague d'étanchéité (40) montée de façon intégrée sur le deuxième élément (13) de façon détachable et comportant une lèvre (42) adaptée pour venir en contact avec le corps annulaire (50), et des moyens de réunion (60, 61, 62) pour monter le corps annulaire sur le premier élément (20) dans une condition dans laquelle le corps annulaire est empêché d'effectuer un déplacement relatif, les moyens de réunion comprenant un élément d'application de résistance de frottement (60) constitué par un joint torique disposé dans une rainure périphérique (71) de façon à être disposé sur l'un ou l'autre parmi le corps annulaire (50) et le premier élément (20), afin d'être appuyé contre l'autre parmi le corps annulaire (50) et le premier élément (20), **caractérisé en ce que** les moyens de réunion comprennent de plus un élément de prévention de détachement formé par une barre flexible (61) adaptée pour être insérée dans des rainures périphériques qui sont disposées sur le corps annulaire (50) et le premier élément (20), avec des positions axiales de celles-ci correspondant l'une à l'autre de façon à empêcher le déplacement axial aussi bien du corps annulaire (50) que du premier élément (20), et une cavité et une saillie (62, 75, 76) disposées sur le corps annulaire (50) et sur le premier élément (20) avec engagement axial pour empêcher la rotation relative du corps annulaire (50) et du premier élément (20).

2. Agencement d'étanchéité selon la revendication 1, **caractérisé par** une encoche (74) disposée de façon contiguë à la rainure périphérique (73) sur le premier élément (20) pour insérer la barre flexible à l'intérieur de l'espace annulaire qui est défini entre la rainure périphérique (72) sur le premier élément et la rainure périphérique sur le corps annulaire (50).

3. Agencement d'étanchéité selon la revendication 1 ou 2, **caractérisé en ce que** la saillie est formée par une broche (62).

4. Agencement d'étanchéité selon la revendication 1 ou 2, **caractérisé en ce que** la dimension dans le sens de la largeur de la cavité (76) dans la direction périphérique est établie de façon à être supérieure au diamètre extérieur de la broche (62) et **en ce que** le diamètre intérieur de l'espace annulaire défini par les deux rainures périphériques (72, 73) est établi de façon à être supérieur au diamètre extérieur de la barre flexible (61).

5. Agencement d'étanchéité selon l'une des revendications 1 à 4, **caractérisé en ce que** la barre flexible (61) est constituée par un ressort hélicoïdal en métal ayant un petit diamètre d'enroulement.

6. Agencement d'étanchéité selon l'une des revendications précédentes, **caractérisé en ce que** le corps annulaire (50) comprend une section de forme cylindrique et une section de plaque annulaire (51) disposée sur une extrémité axiale de la section de forme cylindrique de façon à être contiguë à celle-ci et à s'étendre radialement à partir de celle-ci, et ayant un bord périphérique qui regarde vers l'anneau de scellement (40) ou le deuxième élément (3) avec un petit espace entre eux.

7. Agencement d'étanchéité selon la revendication 6, **caractérisé en ce que** la bague d'étanchéité (40) comprend une lèvre radiale (42) adaptée pour venir en contact avec la section de forme cylindrique du corps annulaire (50) et une lèvre latérale (45) adaptée pour venir en contact avec la section de plaque annulaire sur le corps annulaire.

8. Palier pour supporter un cylindre de laminage de façon rotative par rapport à une empoise de cylindre, ledit palier comprenant des pistes intérieures, des flasques disposés sur les côtés d'extrémité axiale des pistes extérieures de façon à être intégrés aux pistes extérieures ou séparés de celles-ci, **caractérisé par** un agencement d'étanchéité selon l'une des revendications 1 à 7.
